# EUROPEAN PATENT APPLICATION

(11) **EP 4 160 117 A1**
(43) Date of publication of application: **05.04.2023**
(21) Application number: 21814332.9
(22) Date of filing: 12.05.2021
(51) Int. Cl.: F25B 43/02

(54) **GAS-LIQUID SEPARATOR**

(30) Priority: 29.05.2020 CN 202010472959
(71) Applicant: SHAOXING SANHUA NEW ENERGY AUTOMOTIVE COMPONENTS CO. LTD, Zhejiang 312000 (CN)
(72) Inventor: XIA, Jiangnan, Shaoxing, Zhejiang 312000 (CN); ZHANG, Yufeng, Shaoxing, Zhejiang 312000 (CN); JIANG, Zongbao, Shaoxing, Zhejiang 312000 (CN); ZHANG, Rongrong, Shaoxing, Zhejiang 312000 (CN)
(74) Representative: Lavoix
(86) International application number: PCT/CN2021/093254
(87) International publication number: WO 2021/238654

(57) **Abstract**

A gas-liquid separator (1), comprising a seal head (11), a housing (12) and a helical device (13) which are fixedly connected. The seal head (11) is provided with an inflow channel (111) and an outflow channel (112). The inflow channel (111) is provided inside the seal head (11). The helical device (13) is an integral structure, and comprises a guide portion (132), a helical portion (133) and a connection portion (131). The guide portion (132) is positioned between the connection portion (131) and the helical portion (133). The helical device (133) has an inlet (1211), an outlet (1312) and an internal cavity (1313). The internal cavity (1313) is in communication with the inlet (1311) and the outlet (1312). The inlet (1311) is positioned at the connection portion (131). The outlet (1312) is positioned at the helical portion (133). A working medium enters the internal cavity (1313) of the helical device (13) from the inlet (1211) and at least a portion thereof exits the helical device (13) from the outlet (1312).

## Description

This application claims the priority to Chinese Patent Application No. 202010472959.0, titled "GAS-LIQUID SEPARATOR", filed with the China National Intellectual Property Administration on May 29, 2020, the entire disclosure of which is incorporated herein by reference.

### FIELD

The present application relates to components of thermal management systems of vehicles, and in particular to a gas-liquid separator.

### BACKGROUND

A thermal management system of a vehicle includes a gas-liquid separator, and the gas-liquid separator is used for separating liquid and gaseous components of a refrigerant. In a vehicle air conditioning system, the refrigerant includes a mixture of liquid, gas and a small amount of liquid oil. In an existing air conditioning system, the separation of liquid component and gaseous component of a general refrigerant is achieved by simple sedimentation of liquid component or by adjusting pressure condition and temperature condition. However, the performance of separation needs to be improved, especially for being not enough to separate carbon dioxide refrigerant. That how to realize and improve the performance of gas-liquid separation with a simple structure and a low cost is a technical problem.

### SUMMARY

An object according to the present application is to provide a gas-liquid separator, which realizes the separation of components of a working medium with a simple structure and a low cost, and is applicable for the separation of carbon dioxide as a component of the working medium.

A gas-liquid separator includes a sealing head and a housing. The sealing head is fixed to the housing. The sealing head is provided with an inflow passage and an outflow passage, the inflow passage is located in the sealing head. The gas-liquid separator further comprises a helical device, the helical device is of an integral structure, the helical device comprises a guiding portion and a helical portion, the guiding portion comprises a connecting portion, the connecting portion is located on at least part of an outer circumference of the guiding portion, the helical device is limited to the sealing head through the connecting portion, the helical device has an inlet, an outlet and an inner chamber, the inlet is in communication with the outlet through the inner chamber, the inlet is located in the guiding portion, the outlet is located at a rear end of the helical portion, a working medium flows into the inner chamber of the helical device through the inlet, at least part of the working medium flows out of the helical device through the outlet, and the outlet of the helical device is configured to covey the working medium tangentially to a wall surface of the housing for gas-liquid separation.

The helical device of the gas-liquid separator in the above technical solution has the guiding portion and the helical portion, and the outlet of the helical device coveys the working medium tangentially to the wall surface of the housing for gas-liquid separation, which realizes the separation of components of the working medium with a simple structure and a low cost.

### BRIEF DESCRIPTION OF THE DRAWINGS

FIG. 1 is a schematic structural view of a cross section of a gas-liquid separator according to an embodiment of the present application;
FIG. 2 is a partial schematic view of a cross section of a helical device cooperating with other members shown in FIG. 1;
FIG.3 is a schematic perspective view of the helical device in FIG. 1;
FIG. 4 is a schematic front view of the of helical device in FIG. 3;
FIG. 5 is another perspective view of the helical device in FIG. 4;
FIG. 6 is a schematic view of a cross section of the helical device taken along line V-V in FIG. 5; and
FIG. 7 is a schematic structural view of a cross section of the gas-liquid separator according to another embodiment of the present application.

### DETAILED DESCRIPTION OF THE EMBODIMENTS

The embodiments are described below with reference to the accompanying drawings.

A thermal management system of a vehicle includes a gas-liquid separator, the gas-liquid separator is configured to separate liquid and gaseous components of a working medium in the thermal management system. The working medium is mainly a refrigerant, and the refrigerant includes a carbon dioxide refrigerant.

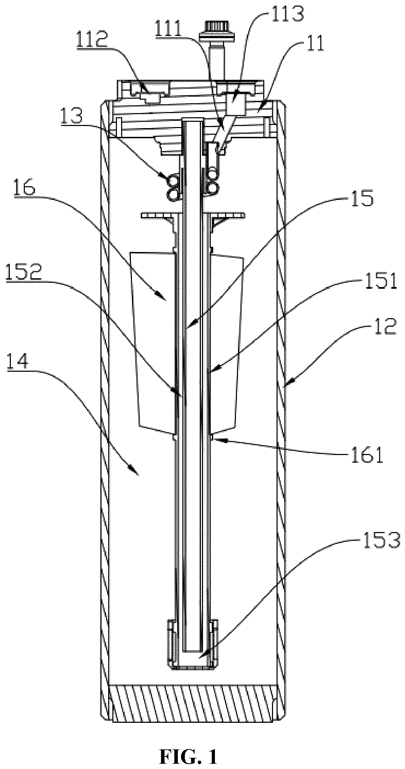

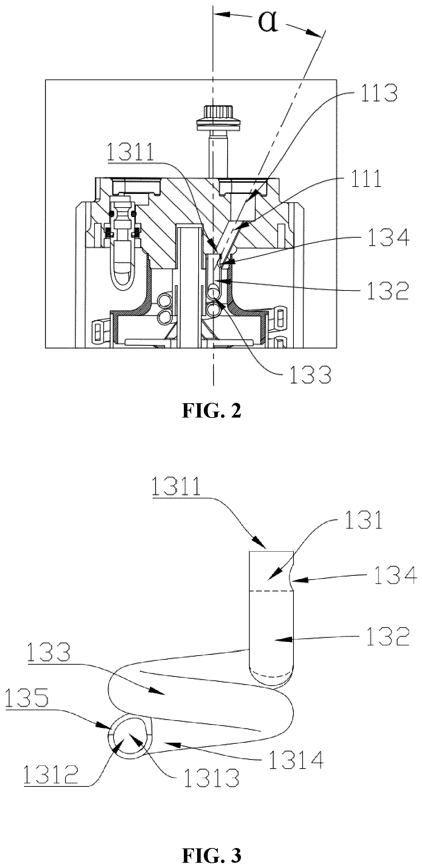

Referring to FIG. 1, a gas-liquid separator 1 includes a sealing head 11, a housing 12 and a helical device 13. The sealing head 11 is connected to the housing 12 in a limited manner, the sealing head 11 is provided with an inflow passage 111 and an outflow passage 112, and the inflow passage 111 is located in the sealing head. In conjunction with FIG. 3, the helical device 13 is of an integral structure, the helical device 13 includes a guiding portion 132 and a helical portion 133, the guiding portion 132 includes a connecting portion 131, the connecting portion 131 is a part of the guiding portion 132, and the connecting portion 131 is located on an outer circumference of the guiding portion 132. In this embodiment, the connecting portion 131 is a circular pipe, the guiding portion 132 is also a circular pipe, the connecting portion 131 and the guiding portion 132 are of an integral structure, the connecting portion 131 is connected to the guiding portion 132 to form a straight pipe, and the connecting portion 131 of the straight pipe is fixed to the sealing head 11 by welding, so that the helical device 13 is in communication with the inflow passage 111. Certainly, the connecting portion 131 and the guiding portion 132 herein may have other structure, which is not limited herein. Certainly, the helical device 13 and the sealing head 11 are not limited to being fixed by welding through the connecting portion 131, and the connection between the helical portion 133 and the sealing head may be limited connection such as by snapping or locking, which is not limited herein. The helical device 13 includes an inlet 1311, an outlet 1312 and an inner chamber 1313, the inlet 1311 is in communication with the outlet 1312 through the inner chamber 1313, the inlet 1311 is located in the guiding portion 132, the outlet 1312 is located at a rear end of the helical portion 133, a working medium flows into the inner chamber 1313 of the helical device 13 through the inlet 1311, and at least part of the working medium flows out of the helical device 13 through the outlet 1312. The guiding portion 132 guides a gas-liquid mixture into the helical portion 133, and the outlet of the helical portion 133 coveys the gas-liquid mixture tangentially to a wall surface of the housing for gas-liquid separation after sufficient mixing. The helical device 13 has a simple structure and a low production cost.

As shown in FIG. 2, at least one through hole 134 is defined in the guiding portion 132, the at least one through hole 134 is located on a pipe wall of the guiding portion 132, an inner chamber of the guiding portion 132 is in communication with the inflow passage 111 through the at least one through hole 134, the inlet 1311 of the helical device 13 and the at least one through hole 134 are in communication with the inflow passage 111, and the provision of the at least one through hole in the guiding portion 132 can reduce the blockage or noise after the low-temperature and low-pressure working medium enters the helical device 13.

As shown in FIG. 2, the gas-liquid separator further includes an inflow port 113, the inflow port 113 is located in the sealing head 11, the inflow port 113 is in communication with the helical device 13 through the inflow passage 111, a first angle α is formed between an axis of the guiding portion 132 and an axis of the inflow passage 111, and 0°≤α≤25°. The arrangement of angle of the inflow passage 111 can simplify the processing technology, avoid the bending design of the flow passage, and reduce the production cost.

As shown in FIGS. 2 to 5, a direction of the outlet of the helical device 13 is substantially perpendicular to an axis of the helical device 13, which enables the gas-liquid mixture to be conveyed tangentially out of the outlet of the helical device 13 to a gas-liquid separation chamber, and the gas-liquid mixture rotates in the gas-liquid separation chamber and the liquid particles begin to be separated from the gas.

As shown in FIGS. 3, 5 and 6, a beveled portion 135 is provided at an outlet end 1314 of the helical device 13; a second angle β is formed between the outlet end and a pipe wall at the outlet of the helical portion 133 by the beveled portion 135, and 0°≤β≤90°. The arrangement of the beveled portion 135 can increase a flow area of the outlet, so that the gas-liquid mixture can more easily flow out of the outlet of the helical device 13.

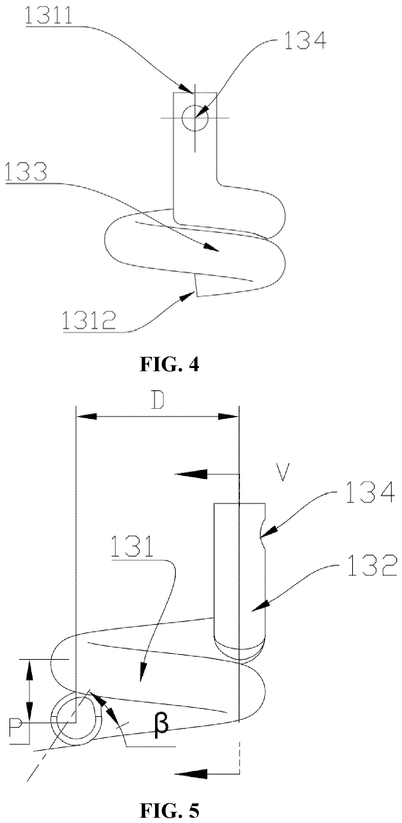

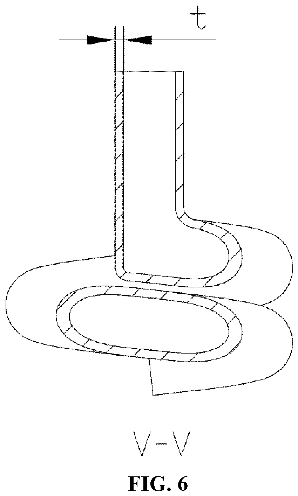

As shown in FIGS. 5 and 6, the helical portion 133 of the helical device 13 is a circular helical pipe, a helical pitch of the helical portion 133 is recorded as P, the helical pitch refers to a distance between centers of cross-sectional circles of two adjacent helical sections of the helical pipe, 3mm≤P≤5mm, a helical diameter is recorded as D, the helical diameter refers to a vertical distance from a central axis of the guiding portion 132 to a center of the outlet, 10mm≤D≤20mm, a wall thickness of the helical portion 133 is recorded as t, the wall thickness of the helical portion 133 is a vertical distance between an inner wall and an outer wall, and 0.5mm≤t≤1mm in a case that the working medium is carbon dioxide, which not only ensures the strength of the helical portion 133, but also takes into account the cost. The above embodiments are described with the circular pipe, and the helical portion 133 of the helical device 13 can also be in other pipe forms, such as a flat pipe. In this embodiment, the helical device 13 is injection-molded by plastic, which has a simple structure and a low cost; the helical device 13 can be formed by other method with different material.

As shown in FIG. 1, the gas-liquid separator further includes an accommodating chamber 14, the accommodating chamber 14 at least includes a space formed by the sealing head 11 and the housing 12, the gas-liquid separator further includes a suction pipe assembly 15, one end of the suction pipe assembly 15 is fixed to the sealing head 11, the other end of the suction pipe assembly 15 is freely arranged in the accommodating chamber 14, and at least part of the helical portion 133 of the helical device 13 closely cooperates with the suction pipe assembly for limiting. The structure of the arrangement not only firmly and tightly fixes the helical device 13, but also enables the gas-liquid mixture to be conveyed tangentially out of the outlet of the helical device 13 to the gas-liquid separation chamber. In this embodiment, the accommodating chamber 14 is used as the gas-liquid separation chamber. At least part of an inner wall of the helical portion 133 of the helical device 13 closely abuts against an outer wall of the suction pipe assembly 15.

The suction pipe assembly 15 includes an external suction pipe 151, an internal suction pipe 152 and an oil return device 153, at least part of the internal suction pipe 152 is located in the external suction pipe 151, the oil return device 153 is located on a side close to a bottom of the housing 12 and is connected to the external suction pipe 151, the external suction pipe 151 is configured to output the gaseous working medium (such as gaseous carbon dioxide refrigerant) to the oil return device 153 from the helical device 13 by pipe conveying; and the internal suction pipe 152 is configured to output the gaseous working medium (gaseous carbon dioxide refrigerant) to the outflow passage 112 of the sealing head 11 from the oil return device 153, and the working medium flows out of the gas-liquid separator from the outflow passage 112. In addition, the external suction pipe is provided with a drying bag 16, the external suction pipe includes a limiting portion 161, the limiting portion 161 is protrusions which are spaced apart with a set distance, and the drying bag 16 is clamped between the limiting portion 161 and the limiting portion 161. The limiting portion has a simple structure and occupies a small space, and the drying bag can absorb the moisture in the gas-liquid separator and play a drying role on the working medium.

In this embodiment, the gas-liquid two-phase low-temperature and low-pressure working medium during operation of the system can flow through the inflow port 113 and the inflow passage 111, and then flow into the helical portion 133 of the helical device 13 through the guiding portion 132 of the helical device 13, and flow out of the outlet 1312 of the helical device 13 after being sufficiently mixed by the helical device 13. The mixed gas-liquid two-phase working medium rotates along an inner wall of the housing 12, the gaseous working medium rises, the liquid working medium sinks, the liquid working medium is stored in the accommodating chamber 14, and the gaseous working medium flows out of the gas-liquid separator through the outflow passage 112 and can directly enter a compressor, which is beneficial to reducing the liquid hammer of the compressor.

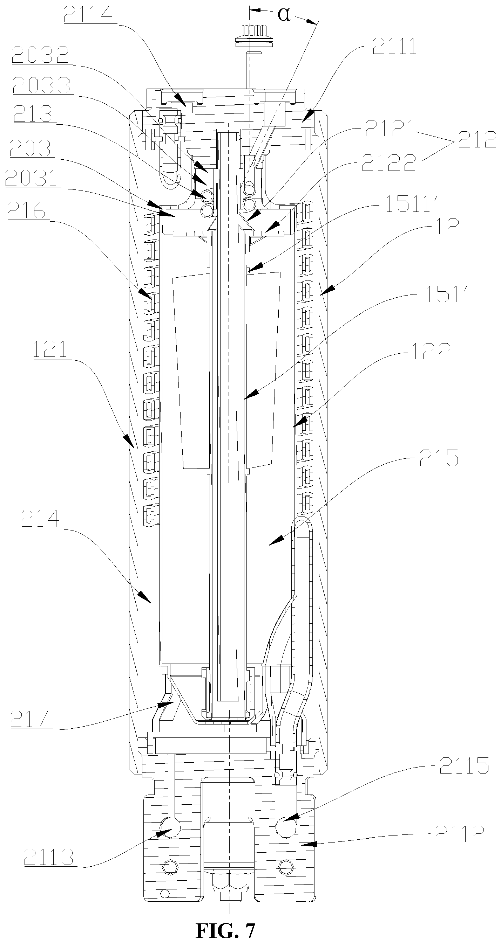

Referring to FIG. 7, in a second embodiment, the sealing head 211 of the gas-liquid separator includes a first sealing head 2111 and a second sealing head 2112, the housing 12 includes an external housing 121 and an internal housing 122, the first sealing head 2111 and the second sealing head 2112 are limitedly connected to the external housing 121, and the connection method is not limited herein, which may be welding, or riveting, or other fixing methods.

The gas-liquid separator further includes a fixing member 203, openings 2031 and 2032 are defined at two ends of the fixing member 203, an accommodating chamber 2033 is defined in the fixing member, the openings of the fixing member 203 are in communication with the accommodating chamber 2033, the internal housing 122 is a tank with an open end, one end, defined with the opening 2031, of the fixing member is sealedly fixed to the open end of the internal housing, the other end, defined with the opening 2032, of the fixing member 203 is sealedly fixed to the first sealing head 2111, the fixing method is not limited herein, and the arrangement of the fixing member enables a chamber formed by the internal housing, the first sealing head 2111 and the fixing member to form a closed chamber, that is, a second chamber 215, which can store the working medium (the liquid carbon dioxide refrigerant).

A central axis of the first sealing head 2111 is substantially parallel to or is coaxial with the guiding portion 132 of the helical device 13, at least part of the helical portion 133 of the helical device 13 is arranged in the accommodating chamber 2033, and a structure and a connection method of the helical device 13 are the same with that in the first embodiment, and are not be repeated herein.

Referring to FIG. 7, the gas-liquid separator further includes a deflector 212, the deflector 212 and the external suction pipe are connected as a whole or have an integral structure, and the deflector 212 is arranged below the helical device 13 and is connected to an inlet end 1511' of the external suction pipe 151". The deflector 212 includes a supporting portion 2121and a deflecting portion 2122, the deflecting portion 212 is annular, and the deflecting portion 2122 is arranged along an outer wall of the inlet end 1511' of the external suction pipe 151' toward an inner wall of the housing and has a set distance from the inner wall of the housing. The supporting portion 2122 is at least one right-angled triangle supporting plate, the at least one right-angled triangle supporting plate is fixedly arranged perpendicular to the deflecting plate along the outer wall of the external suction pipe 151' toward a direction of the helical device 13, a circle is defined by the multiple right-angled triangle plates, the deflecting portion of the deflector can guide the mixed working medium to the inner wall of the internal housing, which is beneficial to the separation of gaseous and liquid working medium. The supporting portion in the deflector can be used to fix the internal suction pipe. The structure and connection method of the suction pipe assembly are the same with that in the first embodiment, and are not be repeated herein.

The gas-liquid separator includes a first chamber 214 and a second chamber 215, the first chamber 214 at least includes a space formed by the internal housing 122 and the external housing 121, the second chamber at least includes a spaced formed by the internal housing 122, the fixing member 203 and the first sealing head 2111, and the first chamber 213 is in communication with the second chamber 214. The gas-liquid separator includes a heat exchanger 216, one end of the heat exchanger 216 is fixed to the first sealing head 2111, the other end of the heat exchanger 216 is fixed to the second sealing head 2112, the first sealing head 2111 includes a high-temperature and high-pressure working medium inflow port 2114, the second sealing head 2112 includes a high-temperature and high-pressure working medium outflow port 2115, one end of the heat exchanger 216 is sealedly snap-fitted with the first sealing head 2111, the other end of the heat exchanger 216 is sealedly snap-fitted with the second sealing head 2112, the heat exchanger 216 and each sealing head are locked at one time by a snap, without welding or secondary locking, and the assembly is safe, reliable and convenient.

A main body portion of the heat exchanger 216 is located in the first chamber 214 and is arranged between an outer wall of the internal housing122 and an inner wall of the external housing 121, and a high-temperature and high-pressure working medium is injected into the heat exchanger 216 for exchanging heat with the low-temperature and low-pressure gaseous working medium. The main body portion of the heat exchanger 216 is a main heat exchange portion.

The second sealing head 2112 has an air outlet 2113, the gas-liquid separator further includes a filter 217, the filter 217 is located in the second chamber 214, and the filter 217 is covered outside the air outlet 2113 and is fixed between the internal housing 122 and the second sealing head 2112.

In this embodiment, the gas-liquid two-phase low-temperature and low-pressure working medium during operation can flow into the helical device 13 through the inflow port and the inflow passage 111, and flow out of the helical device 13 through the outlet of the helical device 13 after being mixed by the helical device 13. The gas-liquid working medium in the first chamber moves along the inner wall of the housing, the gaseous working medium rises, the liquid working medium sinks, the liquid working medium is stored in the first chamber (a low-pressure liquid storage chamber), the gaseous working medium directly enters the second chamber and exchanges heat with the heat exchanger in the second chamber, and the gaseous working medium after heat exchange leaves the gas-liquid separator after being filtered by the filter.

It should be noted that the above embodiments are only used to illustrate the present application, and not to limit the technical solution described according to the present application, such as the definition of directionality such as "front", "rear", "left", "right", "up" and "down". This specification has described the present application in detail with reference to the above embodiments, however, those skilled in the art should understand that they can still modify or equivalently replace the present application, and all technical solutions and improvements that do not depart from the spirit and scope of the present application should be covered within the scope claimed by the claims of the present application.

## Claims

1. A gas-liquid separator, comprising a sealing head and a housing, wherein the sealing head is fixed to the housing, the sealing head is provided with an inflow passage and an outflow passage, the inflow passage is located in the sealing head, the gas-liquid separator further comprises a helical device, the helical device is of an integral structure, the helical device comprises a guiding portion and a helical portion, the guiding portion comprises a connecting portion, the connecting portion is located on at least part of an outer circumference of the guiding portion, the helical device is connected to the sealing head through the connecting portion in a limited or fixed manner, the helical device has an inlet, an outlet and an inner chamber, the inlet is in communication with the outlet through the inner chamber, the inlet is located in the guiding portion, the outlet is located at a rear end of the helical portion, a working medium flows into the inner chamber of the helical device through the inlet, at least part of the working medium flows out of the helical device through the outlet, and the outlet of the helical device coveys the working medium to a wall surface of the housing.

2. The gas-liquid separator according to claim 1, wherein at least one through hole is defined in the guiding portion, the at least one through hole is located on a pipe wall of the guiding portion, the inner chamber of the helical device is in communication with the inflow passage through the at least one through hole, and the inlet of the helical device and the at least one through hole are in communication with the inflow passage.

3. The gas-liquid separator according to claim 2, wherein the gas-liquid separator further comprises an inflow port, the inflow port is formed in the sealing head, the inflow port is in communication with the helical device through the inflow passage, a first angle α is formed between an axis of the guiding portion and an axis of the inflow passage, and 0°≤α≤25°.

4. The gas-liquid separator according to any one of claims 1 to 3, wherein an outflow direction of the working medium at the outlet of the helical device is substantially perpendicular to an axis of the gas-liquid separator, a beveled portion is provided at an outlet end of the helical device; a second angle β is formed between the outlet end and a pipe wall at the outlet of the helical portion by the beveled portion, and 0°≤β≤90°.

5. The gas-liquid separator according to claim 4, wherein the gas-liquid separator has an accommodating chamber, the accommodating chamber at least comprises a chamber formed by the sealing head and the housing, the gas-liquid separator further comprises a suction pipe assembly, one end of the suction pipe assembly is fixed to the sealing head, the other end of the suction pipe assembly is a free end, the other end is located in the accommodating chamber, and at least part of an inner wall of the helical portion of the helical device closely abuts against an outer wall of the suction pipe assembly.

6. The gas-liquid separator according to claim 5, wherein the suction pipe assembly comprises an external suction pipe, an internal suction pipe and an oil return device, at least part of the internal suction pipe is located in the external suction pipe, the oil return device is located on a side close to a bottom of the housing and is connected to the external suction pipe, the external suction pipe is configured to output the gaseous working medium to the oil return device from the helical device by pipe conveying; and the internal suction pipe is configured to output the gaseous working medium to the outflow passage from the oil return device.

7. The gas-liquid separator according to claim 6, wherein the sealing head comprises a first sealing head and a second sealing head, the housing comprises an external housing and an internal housing, the first sealing head and the second sealing head are fixedly connected to the external housing, the gas-liquid separator further comprises a fixing member, openings are defined at two ends of the fixing member, an accommodating chamber is defined in the fixing member, the two openings at the two ends of the fixing member are in communication with the accommodating chamber, the internal housing is a tank with an open end, and, one end, defined with one opening, of the fixing member is sealedly fixed to the open end of the internal housing, and the other end, defined with the other end opening, of the fixing member is fixed to the first sealing head, the first sealing head is fixedly connected to the helical device, and at least part of the helical portion of the helical device is arranged in the accommodating chamber.

8. The gas-liquid separator according to claim 4, wherein the sealing head comprises a first sealing head and a second sealing head, the housing comprises an external housing and an internal housing, the first sealing head and the second sealing head are fixedly connected to the external housing, the gas-liquid separator further comprises a fixing member, openings are defined at two ends of the fixing member, an accommodating chamber is defined in the fixing member, the two openings at the two ends of the fixing member are in communication with the accommodating chamber, the internal housing is a tank with an open end, one opening at one end of the fixing member is sealedly fixed to the open end of the internal housing, the other opening at the other end of the fixing member is fixed to the first sealing head, the first sealing head is fixedly connected to the helical device, and at least part of the helical portion of the helical device is arranged in the accommodating chamber.

9. The gas-liquid separator according to claim 7, wherein the gas-liquid separator comprises a first chamber and a second chamber, the first chamber at least comprises a spaced formed by the internal housing and the external housing, the second chamber at least comprises a spaced formed by the internal housing, the fixing member and the first sealing head, and the first chamber is in communication with the second chamber.

10. The gas-liquid separator according to claim 9, wherein the second sealing head has an air outlet, the gas-liquid separator further comprises a filter, the filter is located in the second chamber, and the filter is covered outside the air outlet and is fixed between the internal housing and the second sealing head.

11. The gas-liquid separator according to any one of claims 6 to 10, wherein the gas-liquid separator further comprises a deflector, the deflector and the external suction pipe have an integral structure, and the deflector is arranged directly below the helical device and is connected to an inlet end of the external suction pipe.

12. The gas-liquid separator according to claim 11, wherein the deflector comprises a supporting portion and a deflecting portion, the deflecting portion is an annular deflecting plate, the deflecting plate is arranged outward along an inner wall of an inlet end of the deflecting portion, the supporting portion is at least one right-angled triangle supporting plate, the at least one right-angled triangle supporting plate is fixedly arranged perpendicular to the deflecting plate along the inner wall of the inlet end of the deflecting plate toward a direction of the helical device.

13. The gas-liquid separator according to claim 11, wherein the gas-liquid separator comprises a heat exchanger, one end of the heat exchanger is fixed to the first sealing head, the other end of the heat exchanger is fixed to the second sealing head, the heat exchanger is arranged in the first chamber and is arranged between an outer wall of the internal housing and an inner wall of the external housing, and a high-temperature and high-pressure working medium is injected into the heat exchanger for exchanging heat with the gaseous working medium.

14. The gas-liquid separator according to claim 11, wherein the gas-liquid separator further comprises a drying bag, the external suction pipe has a limiting portion, the limiting portion is protrusions which are spaced apart with a set distance, and the drying bag is limited to the external suction pipe through the limiting portion.

15. The gas-liquid separator according to any one of claims 1 to 3, wherein a helical pitch of the helical portion is greater than or equal to 3mm and less than or equal to 5mm, a helical diameter of the helical portion is greater than or equal to 10mm and less than or equal to 20mm, and a wall thickness of the helical portion is greater than or equal to 0.5mm and less than or equal to 1mm.
